(19) **Europäisches Patentamt**

**European Patent Office**

**Office européen des brevets**

(11) **EP 0 769 761 A1**

(12) **EUROPÄISCHE PATENTANMELDUNG**

(43) Veröffentlichungstag:
23.04.1997 Patentblatt 1997/17

(51) Int. Cl.⁶: **G06T 11/00**

(21) Anmeldenummer: 95116134.8

(22) Anmeldetag: 12.10.1995

(84) Benannte Vertragsstaaten:
AT CH DE ES FR GB IT LI NL

(71) Anmelder: **Schablonentechnik Kufstein Aktiengesellschaft**
**A-6330 Kufstein (AT)**

(72) Erfinder:
• **Mungenast, Heinz**
**A-6330 Kufstein (AT)**

• **Enk, Thomas**
**A-6342 Niederndorf (AT)**

(74) Vertreter: **TER MEER - MÜLLER - STEINMEISTER & PARTNER**
**Mauerkircherstrasse 45**
**81679 München (DE)**

(54) **Musterbildungsverfahren**

(57) Die Erfindung betrifft ein Musterbildungsverfahren, insbesondere für den Papier- und Textildruck, gekennzeichnet durch die Herstellung eines rapportierfähigen Einzelmusters innerhalb eines Einzelrapports (1) zur Erzeugung eines aus mehreren Einzelmustern bestehenden Gesamtmusters, bei dem über den Einzelrapport (1) hinausstehende Bereiche von Motiven (16, ...) so in den Einzelrapport (1) übertragen werden, daß bei Bildung des Gesamtmusters durch Aneinanderfügen der Einzelrapporte (1) die ursprünglichen Motive (16, ...) rückgebildet werden.

Fig. 1

**Beschreibung**

Die Erfindung bezieht sieh auf ein Musterbildungsverfahren, das insbesondere im Bereich des Papier- oder Textildrucks zum Einsatz kommt.

Es gibt bereits Zeichenprogramme für die Erstellung von künstlerischen Mustern und Zeichnungen auf einem Personal Computer oder einer Workstation. Insbesondere im textilen Bereich und auch für den Druck von Tapeten ist es üblich, aus einer Bildvorlage ein Gesamtmuster zu erzeugen, welches durch oftmalige geometrische Addition der Bildvorlage große Flächen mit immer demselben Motiv auszufüllen vermag. Schwierigkeiten bereitet dieser Vorgang der Addition der Bildvorlage aber anjenen Stellen, an welchen Ränder der Bildvorlage zusammentreffen. Hier muß üblicherweise eine manuelle Retusche erfolgen, damit das Bild eines überall gleichmäßig ineinander übergehenden Gesamtmusters gewahrt bleibt.

Der Erfindung liegt die Aufgabe zugrunde, die Musterbildung zu vereinfachen.

Die Lösung der gestellten Aufgabe ist im kennzeichnenden Teil des Patentanspruchs 1 abgegeben. Vorteilhafte Ausgestaltungen der Erfindung sind den Unteransprüchen zu entnehmen.

Ein Musterbildungsverfahren nach der Erfindung kennzeichnet sich aus durch die Herstellung eines rapportierfähigen Einzelmusters innerhalb eines Einzelrapports zur Erzeugung eines aus mehreren Einzelmustern bestehenden Gesamtmusters, bei dem über den Einzelrapport hinausstehende Bereiche von Motiven so in den Einzelrapport übertragen werden, daß bei Bildung des Gesamtmusters durch Aneinanderfügen der Einzelrapporte die ursprünglichen Motive rückgebildet werden.

Das rapportierfähige Einzelmuster wird vorzugsweise unter Verwendung eines elektronischen Rechners auf dem Bildschirm eines Monitors erstellt und in einem elektronischen Speicher zwischengespeichert.

Es können somit jene Bereiche eines gerade bearbeiteten Motivs, welche außerhalb des zuvor definierten Einzelrapports liegen, in jene Bereiche innerhalb des Einzelrapports am Bildschirm automatisch übertragen werden, in welchen diese aufgrund des zugrundegelegten geometrischen Additionsschemas nach der Addition tatsächlich zu liegen kommen. Der Vor gang läuft rechnergestützt ab und es werden im allgemeinen alle gerade geänderten oder nachgetragenen Bildpunkte, die außerhalb des Einzelrapports liegen, an die entsprechenden Bildstellen innerhalb des Einzelrapports übertragen. Dabei kann die Übertragung der außerhalb des Einzelrapports liegenden Bereiche von Motiven in den Einzelrapport hinein auch durch Anklicken einer Maus erfolgen, wenn der Cursor zuvor in einen Motivbereich gebracht wurde, der außerhalb des Einzelrapports liegt.

Nach einer vorteilhaften Ausgestaltung der Erfindung wird ausgehend von einem beliebig gewählten Punkt innerhalb eines ersten Einzelrapports mindestens ein Vektor gebildet, welcher zum Identischen Punkt anderer Einzelrapporte weist, in welche Motive, die teilweise im ersten Einzelrapport liegen, hineinragen, wobei die in diesen anderen Einzelrapporten liegenden Bereiche der Motive entgegen der jeweiligen Vektorrichtung um den jeweiligen Vektorbetrag verschoben werden. Die Anzahl der zu bildenden Vektoren entspricht dabei der Anzahl von zum ersten Einzelrapport benachbarten Einzelrapporten, in die Motive ausgehend vom ersten Einzelrapport hineinreichen.

Dabei kann je nach Art des Motivs die Verschiebung entgegen der jeweiligen Vektorrichtung in mehreren Schritten erfolgen, wobei die jeweiligen Verschiebeschritte in unterschiedlichen Richtungen ausgeführt oder in derselben Richtung ausgeführt werden, je nach Struktur des Motivs.

Der Rechner ist in der Lage, nach Bildung mehrerer aneinander angrenzender Einzelrapporte, Auswahl eines der Einzelrapporte und Einbringen eines Motivs in den Einzelrapport, welches auch in andere Einzelrapporte hineinreicht, die jeweiligen Vektoren automatisch aufzufinden, die von einem gewählten Punkt des ausgewählten Einzelrapports zu identischen Punkten der anderen Einzelrapporte weisen, in die Bereiche des Motivs hineinreichen, so daß danach auch die Rückverschiebung dieser außerhalb des ausgewählten Einzelrapports liegenden Bereiche des Motivs in den ausgewählten Einzelrapport erfolgen kann. Die Bildung des rapportierfähigen Einzelmusters läßt sich somit weitestgehend automatisieren, was das Musterbildungsverfahren erheblich vereinfacht.

Das rapportierfähige Einzelmuster kann zur Bildung des Gesamtmusters wiederholt aus dem elektronischen Speicher ausgelesen werden, so daß eine sehr schnelle Erstellung des Gesamtmusters möglich ist.

Beispielsweise kann das rapportierfähige Einzelmuster in einen Schablonenrohling übertragen werden, um in ihm das Gesamtmuster zu bilden.

Bei dem Schablonenrohling kann es sich um einen solchen handeln, der mit einer lichtempfindlichen Schicht versehen ist. In diesem Fall erfolgt die Übertragung des rapportierfähigen Einzelmusters in den Schablonenrohling durch Belichtung der lichtempfindlichen Schicht. Der Schablonenrohling selbst kann dabei z. B. als ebenes oder zylinderförmiges Sieb ausgebildet sein.

Die Belichtung der lichtempfindlichen Schicht kann dabei durch den Strahl eines Lasers erfolgen, der in Übereinstimmung mit den im elektronischen Speicher gespeicherten Bilddaten des rapportierfähigen Einzelmusters ein- und ausgeschaltet wird. Durch den Laserstrahl kann die lichtempfindliche Schicht zur Freilegung des darunter liegenden Siebs direkt abgetragen bzw. verdampft werden, oder es ist möglich, mit Hilfe des Laserstrahls die lichtempfindliche Schicht, falls sie aus einem vernetzbaren bzw. polymerisierbaren Material besteht, nur bereichsweise auszuhärten. In einem nachfolgenden Entwicklungsschritt werden dann die nicht belichteten Bereiche ausgewaschen bzw. entfernt.

Möglich ist auch die Belichtung der lichtempfindlichen Schicht des Schablonenrohlings über einen Film, in den zuvor das aus mehreren rapportierfähigen Einzelmustern bestehende Gesamtmuster übertragen wurde.

Die Erfindung wird nachfolgend unter Bezugnahme auf die Zeichnung näher beschrieben. Es zeigen:

**Figur 1** ein Gesamtmuster mit vier Einzelrapporten, in denen Bildmotive vorhanden sind, die in jeweils andere Einzelrapporte hineinragen;
**Figur 2** Verschiebungsvektoren für die Bildstruktur nach Figur 1;
**Figur 3** einen ausgewählten Einzelrapport mit zugeordneten Verschiebungsvektoren für Bereiche von Motiven, die in benachbarte Einzelrapporte reichen;
**Figur 4** einen Einzelrapport mit zwei Motiven, von denen eines in benachbarte Einzelrapporte reicht;
**Figur 5** Verschiebungsvektoren für die Bildstruktur nach Figur 4;
**Figur 6** ein rapportierfähiges Einzelmuster für die Bildstruktur nach Figur 4;
**Figur 7** ein aus mehreren gemäß Figur 6 aufgebauten rapportierfähigen Einzelmustern zusammengesetztes Gesamtmuster;
**Figur 8** einen weiteren Einzelrapport mit mehreren Motiven, die in benachbarte Einzelrapporte reichen;
**Figuren 9 und 10** Verschiebungen in unterschiedlichen Richtungen derjenigen Motivbereiche, die außerhalb des Einzelrapports gemäß Figur 8 liegen;
**Figur 11** ein nach den Verschiebungen erhaltenes rapportierfähiges Einzelmuster;
**Figur 12** ein aus mehreren aneinandergefügten Einzelmustern gemäß Figur 11 bestehendes Gesamtmuster;
**Figur 13** einen rautenförmigen Einzelrapport mit einem Motiv, das in andere Einzelrapporte hineinreicht;
**Figur 14** ein rapportierfähiges Einzelmuster, das aus der Bildstruktur nach Figur 13 erhalten wurde;
**Figur 15** ein aus mehreren rapportierfähigen Einzelmustern gemäß Figur 14 zusammengesetztes Gesamtmuster;
**Figur 16** einen hexagonalen Einzelrapport:
**Figur 17** den Einzelrapport nach Figur 16 mit mehreren darin enthaltenen Motiven, die in benachbarte Einzelrapporte hineinreichen;
**Figur 18** eine Darstellung zur Erläuterung der Verschiebung derjenigen Bereiche der Motive, die in benachbarte Einzelrapporte hineinreichen;
**Figur 19** ein nach Verschiebung erhaltenes rapportierfähiges Einzelmuster;
**Figur 20** ein aus mehreren zusammengesetzten Einzelmustern gemäß Figur 19 bestehendes Gesamtmuster;
**Figur 21** die Bildung eines Einzelrapports mit wellenförmiger Umrandung;
**Figur 22** eine aus mehreren Einzelrapporten gemäß Figur 21 zusammengesetzte Rapportstruktur;
**Figur 23** Verschiebevektoren, die der Rapportstruktur nach Figur 22 zugeordnet sind;
**Figur 24** einen ausgewählten Einzelrapport mit darin enthaltenen Motiven, die benachbarte Einzelrapporte erreichen sowie die zugeordneten Verschiebevektoren;
**Figur 25** ein Beispiel eines ausgewählten Einzelrapports gemäß Figur 24 mit darin enthaltenen Motiven, die benachbarte Einzelrapporte erreichen;
**Figur 26** ein rapportierfähiges Einzelmuster, erhalten aus der Struktur nach Figur 25;
**Figur 27** ein aus mehreren zusammengefügten Einzelmustern gemäß Figur 26 bestehendes Gesamtmuster;
**Figur 28** eine Struktur aus mehreren Einzelrapporten mit hexagonalem Grundaufbau;
**Figur 29** eine Bildstruktur, bei der ein Motiv in nur einer Richtung mehrere Einzelrapporte durchläuft;
**Figur 30** ein aus der Bildstruktur nach Figur 29 erhaltenes rapportierfähiges Einzelmuster;
**Figur 31** ein aus mehreren zusammengefügten rapportierfähigen Einzelmustern gemäß Figur 30 gebildetes Gesamtmuster; und
**Figur 32** eine Vorrichtung zur Durchführung des erfindungsgemäßen Verfahrens.

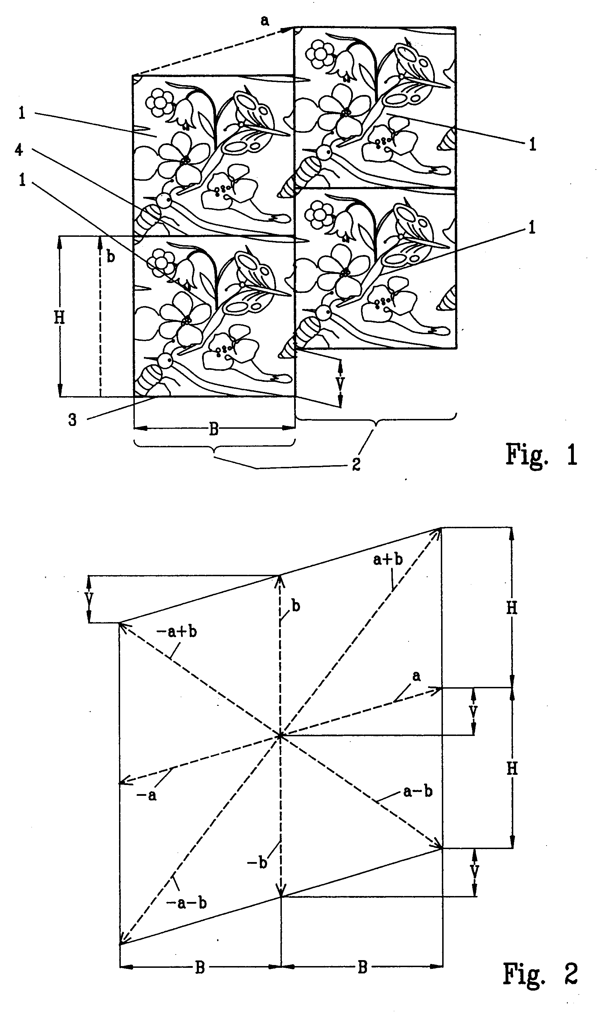

Die Figur 1 zeigt vier Einzelrapporte 1, das sind solche Abschnitte eines Gesamtmusters, die stets mit dem gleichen Einzelmuster ausgefüllt sind. Diese Einzelrapporte haben eine rechteckige Form mit einer Einzelrapporthöhe H und einer Einzelrapportbreite B. Zusätzlich sollen benachbarte Spalten 2 jeweils um einen Vertikalversatz V in vertikaler Richtung verschoben sein. Als Spalte 2 wird hierbei eine Vielzahl von vertikal übereinanderliegenden Einzelrapporten 1 angesprochen. Das bei einer geometrischen Addition von vielen Einzelrapporten in horizontaler als auch vertikaler Richtung entstehende Muster soll als Gesamtmuster angesprochen werden. Aus einem solchen Gesamtmuster sind die in der Figur 1 nebeneinanderliegenden vier Einzelrapporte 1 herausgegriffen. Der Vertikalversatz V kann einem beliebigen nicht notwendigerweise rationalen Bruchteil der Einzelrapporthöhe H entsprechen. Die Einzelrapportbreite wird mit B bezeichnet.

Es gibt mehrere Möglichkeiten, nach denen man sich die Entstehung des Gesamtmusters vorstellen kann. Bei einer dieser Vorstellungen addiert man zunächst eine endliche Anzahl von Einzelrapporten 1 in vertikaler Richtung, d. h. man kopiert den Einzelrapport und fügt diesen dann jeweils um den Betrag H versetzt mit seinem unteren Rapportrand 3 an den oberen Rapportrand 4 des vorhergehenden Einzelrapports 1. Es entsteht so zunächst ein Teilmuster, welches einer Spalte 2 von Einzelrapporten entspricht. Nunmehr kopiert man eine ganze Spalte 2 und verschiebt diese

3

horizontal um den Betrag B und zusätzlich vertikal um den Vertikalversatz V. Dabei kann man ein solches Teilmuster auch um neunzig Grad drehen. Der Vertikalversatz V würde dann in horizontaler Richtung auftreten und als Kopfversatz bezeichnet werden.

Nach einer anderen Vorstellung betrachtet man die Lagen benachbarter Einzelrapporte 1 und bestimmt jene Vektoren, um welche die Einzelrapporte 1 verschoben worden sind, um jeweils eine Nachbarlage einnehmen zu können. Man kann feststellen, daß es zwei Basisvektoren a und b gibt, die jeweils von einem der Eckpunkte eines Einzelrapports 1 zu dem identischen Eckpunkt eines unmittelbar benachbarten Einzelrapportes 1 weisen. Diese Basisvektoren decken sich nicht bzw. sind diese nicht zueinander parallel. In der analytischen Geometrie ist es üblich, diesen Sachverhalt durch die Aussage zu kennzeichnen, daß diese Basisvektoren voneinander linear unabhängig sind. Alle übrigen im Gesamtmuster enthaltenen Einzelrapporte 1 zeigen dann gegenüber dem ersten Einzelrapport 1 einen Verschiebungsvektor, welcher der Beziehung

$$\vec{v}_{m,n} = \vec{a}.m + \vec{b}.n$$

entspricht. Hierin sind n und m beliebige, ganze Zahlen.

In der Figur 2 sind die Basisvektoren a und b nochmals dargestellt. Außerdem zeigt die Figur die beiden negativen Vektoren -a und -b und die für die weiteren Verfahrensschritte relevanten Kombinationsvektoren a+b, a-b, -a-b und -a+b. Alle diese Vektoren haben eine entsprechende Funktion bei der Erstellung des Bildinhalts bzw. des Einzelmusters im ersten Einzelrapport 1 entsprechend dem Vorschlag der Erfindung. Damit nämlich der Bildinhalt dieses ersten Einzelrapports 1 so erstellt werden kann, daß bei einer geometrischen Addition mehrerer Einzelrapporte 1 entsprechend der Vorgangsweise in Figur 1 keine auffälligen Bildstörstellen an den Rändern der Einzelrapporte entstehen, müssen bei dem Entwurf des ersten Einzelrapports 1 die über die Ränder dieses Einzelrapports hinausragenden Bildelemente bzw. Motive kopiert und je nach ihrer ursprünglichen Lage genau um einen dieser Vektoren a, -a, b, -b, a+b, a-b, -a-b oder -a+b verschoben werden.

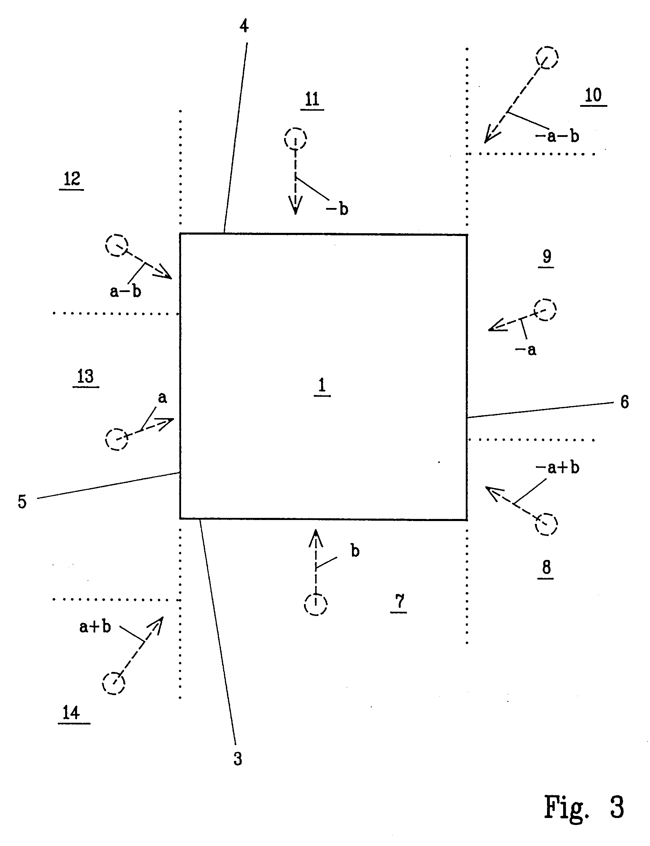

Die Figur 3 zeigt, für welchen der umliegenden bzw. angrenzenden Bereiche des Gesamtmusters welcher der genannten Vektoren als Verschiebungsvektor heranzuziehen ist. Der in der Mitte der Figur 3 dargestellte Einzelrapport 1 soll mit einem Einzelmuster ausgefüllt werden, wobei der das Einzelmuster entwerfende Zeichner mit Hilfe einer graphischen Eingabeperipherie (Digitizer, Maus) die jeweiligen Bildmotive ohne Rücksicht auf die Grenzen des Einzelrapports am Bildschirm und über Computerunterstützung entwirft. Größe und Form des Einzelrapports 1 müssen in einem vorausgegangenen Verfahrensschritt definiert worden sein. Am günstigsten ist es, wenn sofort nachdem ein Bildpunkt festgelegt oder geändert worden ist, dieser an die entsprechende Stelle innerhalb des Einzelrapports 1 kopiert bzw. übertragen wird. Es kann aber diese Kopie bzw. Übertragung auch nach Fertigstellung einer Einzelheit des den Rand des Einzelrapports überschreitenden Motivs durchgeführt werden. Dies würde eine entsprechende Vorauswahl der Betriebsweise erfordern. Nach der jeweiligen Eingabe eines Befehlscodes werden dann alle über die Ränder 3 bis 6 des Einzelrapports hinausragenden Bildmotive kopiert und entsprechend der zuvor definierten Einzelrapportgröße und dem zugrundegelegten Additionsschema verschoben. Außerdem kann gewählt werden, ob die über die Ränder 3 bis 6 hinausragenden und kopierten Bildmotive erhalten bleiben oder gelöscht werden. Die den Einzelrapport 1 umgebenden äußeren acht Flächenbereiche sind der an den unteren Bildrand 3 angrenzende untere Seitenrandbereich 7, der rechte untere Quadrantenbereich 8, der an den rechten Bildrand 6 angrenzende Seitenrandbereich 9, der rechte obere Quadrantenbereich 10, der an den oberen Bildrand 4 angrenzende obere Seitenrandbereich 11, der linke obere Quadrantenbereich 12, der an den linken Bildrand 5 angrenzende Seitenrandbereich 13 und der linke untere Quadrantenbericht 14. Grundsätzlich kann ein Motivelement, welches die Ränder 3 bis 6 überschreitet, in jeden dieser Bereiche hineinragen, wobei jeder dieser Bereiche wiederum einem Einzelrapport entspricht. Eine Überschreitung dieser äußeren Bereiche durch ein Motivelement ist aber nur dann möglich, wenn das Motivelement größer als der zuvor festgelegte Einzelrapport 1 ist. Dies kann durch den Rechner durch Ausgabe einer Fehlermeldung verhindert werden. Es ist dann das Motivelement kleiner zu wählen oder aber der Einzelrapport zu vergrößern. Es gibt aber auch Fälle, in welchen ein Motivelement z. B. über mehrere Rapportbreiten reichen soll, wobei dann diese Motivelemente in Richtung der Höhe H schmal gewählt werden, damit sie mit Hilfe des Vertikalversatzes V einander ausweichen können. Jedem dieser Flächenbereiche 7 bis 14 ist einer der angegebenen Vektoren a, -a, b, -b, a+b, a-b, -a-b oder -a+b zugeordnet. Abschnitte des Bildmotivs, die bei dem ersten Entwurf in dem unteren Seltenrandbereich 7 liegen, müssen um den Vektor b verschoben werden, jene die im Quadrantenbereich 8 liegen, werden um den Vektor -a+b verschoben, usw. Einen Gesamtüberblick über die den Randbereichen zugeordneten Verschiebungen gibt die Tabelle 1.

Tabelle 1

| Randbereiche und zugehörige Verschiebungen | |
|---|---|
| Randbereich: | Verschiebungsvektor: |
| unterer Seitenrandbereich 7 | +b |
| oberer Seitenrandbereich 11 | -b |
| rechter Seitenrandbereich 9 | -a |
| linker Seitenrandbereich 13 | +a |
| linker unterer Quadrantenbereich 14 | a+b |
| rechter unterer Quadrantenbereich 8 | -a+b |
| rechter oberer Quadrantenbereich 10 | -a-b |
| linker oberer Quadrantenbereich 12 | a-b |

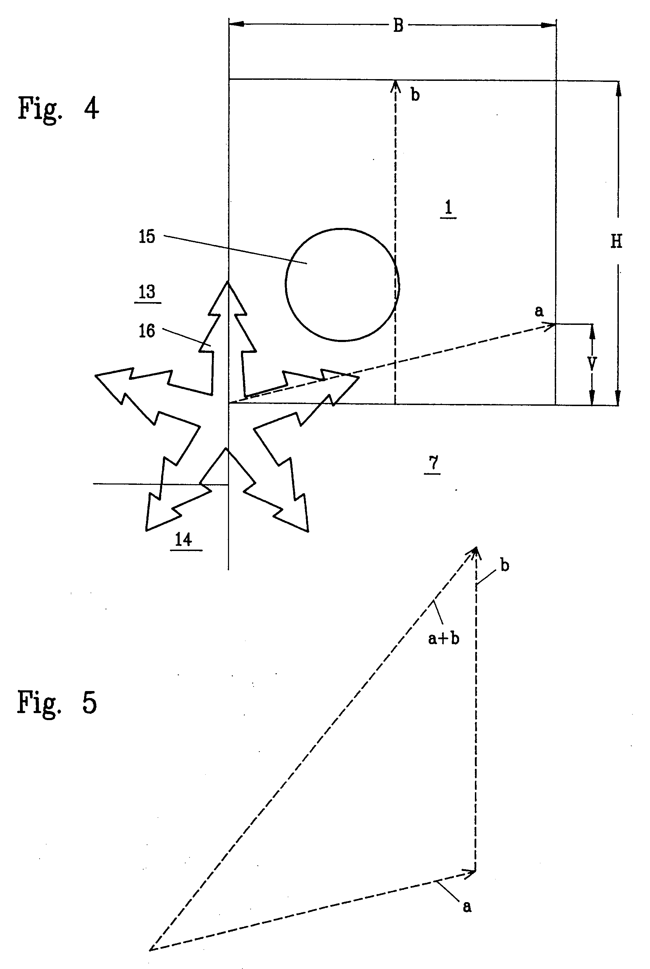

In Figur 4 ist ein einfaches Beispiel eines Bildmotivs innerhalb eines Einzelrapports 1 gezeigt. Das Motiv besteht aus einer Kreisfläche 15 und einem gezackten Stern 16. Die Kreisfläche 15 liegt ganz im Inneren des Einzelrapports 1 und es müssen daher keine Teile dieses Motivelements abgeschnitten und verschoben werden. Anders liegen die Verhältnisse beim gezackten Stern 16. Teile dieses Motivelements liegen in den Bereichen 7, 13 und 14. Für diese Bereiche gelten entsprechend den Angaben in Tabelle 1 die Verschiebungsvektoren a, b und a+b.

In Figur 5 sind diese drei Vektoren a, b und a+b zeichnerisch dargestellt.

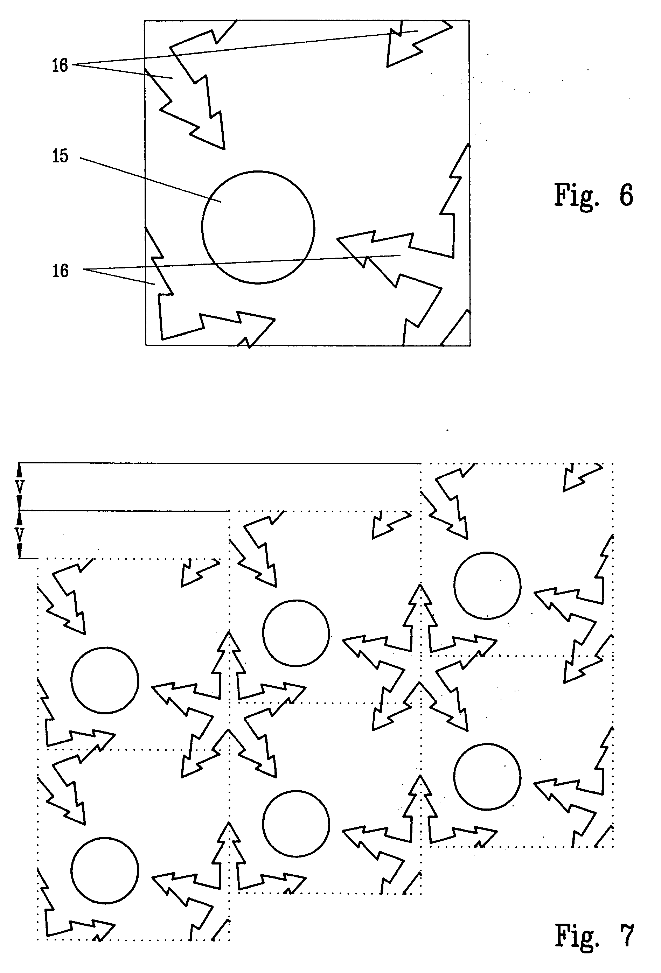

Die Figur 6 zeigt das durch Kopieren und Verschieben der über die Ränder des Einzelrapports 1 hinausragenden Teile der Motivelemente gewonnene Einzelmuster, wobei die den Einzelrapport 1 überschreitenden Bildteile nicht mehr dargestellt sind. Es handelt sich hier also um das für die Addition fertiggestellte Einzelmuster im Inneren des Einzelrapports 1. Die Bildmotive sind ein schon während der Entwurfsphase ganz im Inneren des Einzelrapports gelegener Kreis 15 und ein Zackenstern 16, der die Ränder des Einzelrapports 1 zunächst überschritten hat und der entsprechend der durch ihn benutzten Außenbereiche mehrfach kopiert und verschoben wurde. Zum Schluß wurden die Ränder des Einzelrapports 1 überragenden Bildteile abgeschnitten.

In Figur 7 ist schließlich das Additionsbild dargestellt, welches aus sechs der in Figur 6 gezeigten additionfähigen Einzelmuster gebildet wurde.

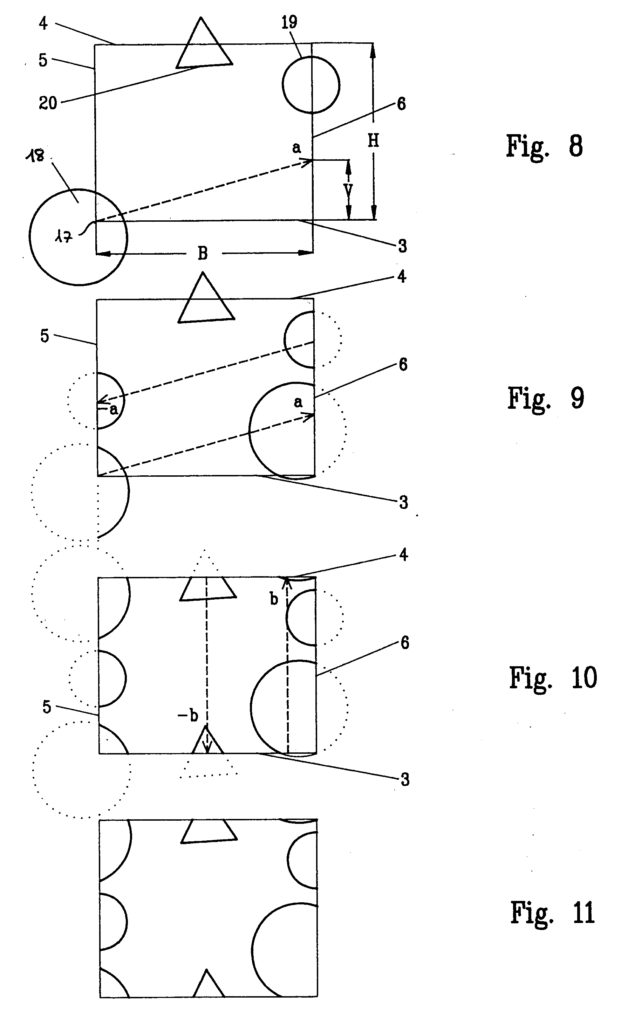

Anhand der Figuren 8 bis 11 wird ein etwas abgewandeltes Verfahren für die Erstellung eines Einzelmusters innerhalb eines Einzelrapports 1 beschrieben. Wiederum soll ein Rechteck die Größe und die Form eines solchen Einzelrapports 1 beschreiben. Die Höhe des Rechtecks entspricht der Einzelrapporthöhe H und dessen Breite der Einzelrapportbreite B. Auch hier soll die geometrische Addition der Einzelrapporte 1 so erfolgen, daß jeweils ein oberer Rand 4 eines Einzelrapports 1 an einen unteren Rand 3 eines anderen Einzelrapports angelegt wird und ebenso ein linker Rand 5 an einen rechten Rand 6, wobei jedoch der linke untere Eckpunkt 17 des einen Einzelrapports um den Vertikalversatz V vom unteren Rand 3 des anderen Einzelrapports abgerückt wird.

Die Figur 8 zeigt die Motivelemente 18, 19 und 20 so wie diese in der Entwurfsphase erstellt wurden. Es ist zu erkennen, daß Teile der Motivelemente 18, 19 und 20 teilweise über die Ränder 4, 5 und 6 des Einzelrapports 1 hinausragen.

In einem ersten Schritt, der in Figur 9 gezeigt ist, werden die Teile der Motivelemente, die über den linken Rand 5 hinausfallen, um den Vektor a nach rechts verschoben und die Teile der Motivelemente, die über den rechten Rand 6 hinausfallen, werden um den Vektor -a nach links verschoben.

In einem weiteren Schritt, dieser ist in Figur 10 gezeigt, werden nun die Teile der Motivelemente, die über den unteren Rand 3 ragen, um den Vektor b nach oben verlagert und jene Teile, die über dem oberen Rand 4 liegen, werden um den Vektor -b nach unten verschoben.

Das Ergebnis dieser Behandlung der Motivelemente ist in Figur 11 zu sehen. Das Einzelmuster ist nun geometrisch additionsfähig, wobei für die Herbeiführung der Additionsfähigkeit nur die Vektoren a, b, -a und -b verwendet werden mußten.

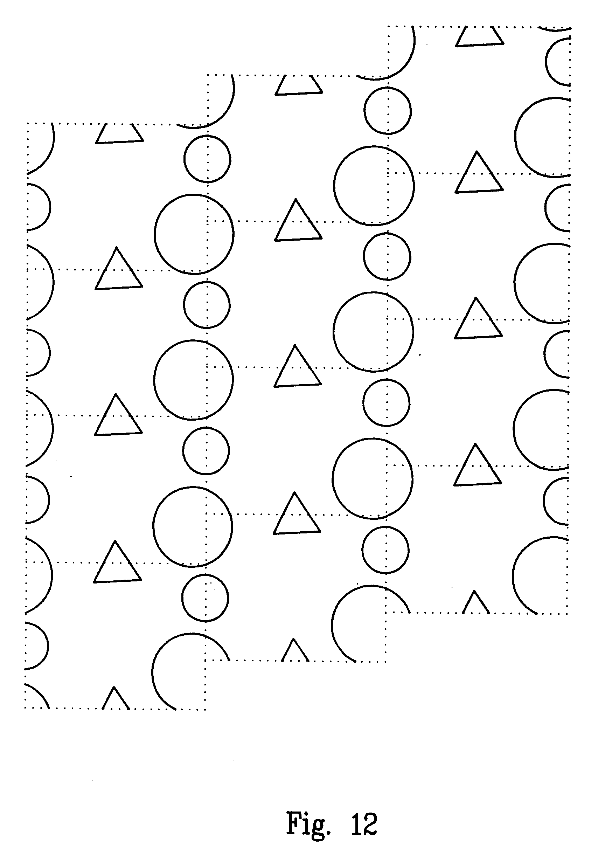

Das Additionsmuster der Figur 12 zeigt die Additionsfähigkeit des Einzelrapports der Figur 11. Beliebig viele mit dem Einzelmuster ausgefüllte Einzelrapporte werden jeweils um ganzzahlige Vielfache der Vektoren a und b verschoben aneinandergefügt, ohne daß durch diese Addition eine Diskontinuität entsteht.

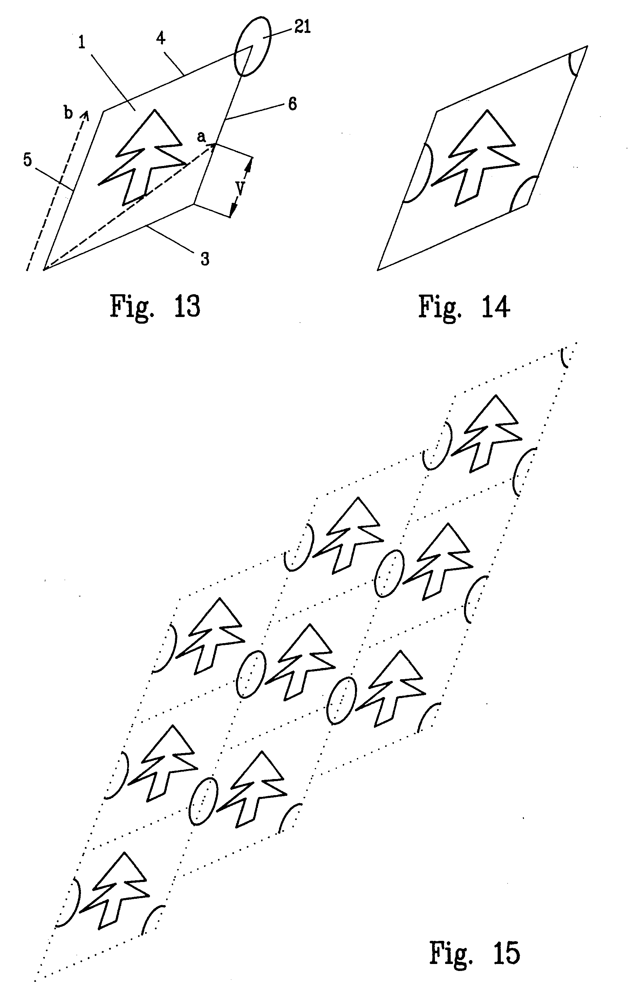

Bisher wurde als Basisfigur eines Einzelrapports stets ein Rechteck vorausgesetzt. Anhand der Figuren 13, 14 und 15 ist gezeigt, daß die angegebenen Verfahrensschritte, durch welche ein Einzelmuster additionsfähig gemacht werden kann, auch bei Zugrundelegung eines Parallelogramms oder einer Raute (= Rhombus) als Basisfigur für einen Einzelrapport in der gleichen Weise gültig bleiben. Hierzu müssen die Vektoren a und b richtig gewählt werden. Der Vektor a wird aus zwei Komponenten gebildet. Eine dieser Komponenten ist jene Seite der Raute (oder des Rechtecks), welche sich nach der Addition vollständig mit einer Seite eines angrenzenden Einzelrapports 1 deckt. Die zweite Komponente des Vektors a ist der Vertikalversatz V, der hier nur dann wirklich vertikal liegen würde, wenn man das Bild noch ein wenig dreht. Der Vektor b entspricht einer anderen Seite der Raute, wobei diese Seite nicht parallel zu jener liegen darf, die bereits als Komponente für den Vektor a gebraucht wurde. Es müssen also jene Seite der Raute, die für die Bildung des Vektors b verwendet wird, und die Seite der Raute, die als Komponente des Vektors a verwendet wird, von einem Eckpunkt der Raute ausgehen.

Die Figur 13 zeigt einen Einzelrapport 1 mit einem Bildmotiv. Das Motivelement 21 ragt über die Ränder 4 und 6 hinaus.

Die Figur 14 zeigt das additionsfähig gemachte Einzelmuster entsprechend der früher aufgestellten Regeln für Kopie und Verschiebung.

Die Figur 15 zeigt die Addition mehrerer Einzelmuster gemäß Figur 14.

Es können auch andere Polygone als Basisfigur für einen Einzelrapport verwendet werden, vorausgesetzt sie sind geometrisch additionsfähig. Im allgemeinen lassen sich alle diese Polygone auf den Fall von Vierecken (Rechtecke, Quadrate, Rauten, Parallelogramme) zurückführen. Einen Sonderfall stellt jedoch das regelmäßige Sechseck dar, weil bei diesem drei Basisvektoren als Verschiebungsvektoren für die Bildelemente definiert werden müssen.

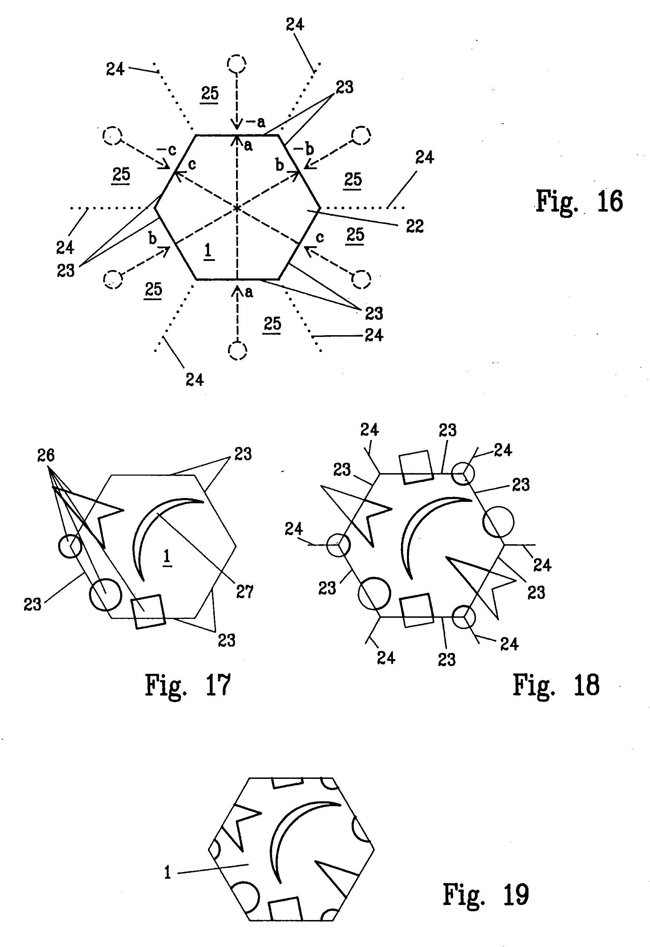

Die Figur 16 zeigt, wie bei einem regelmäßigen Sechseck 22 die drei Basisvektoren bestimmt werden und wie diese den außerhalb des sechseckigen Einzelrapports liegenden, angrenzenden Bereichen zugeordnet werden müssen. Diese Basisvektoren gehen jeweils von der Mitte einer Randseite 23 des Sechsecks aus und weisen zur Mitte der gegenüberliegenden Randseite 23. Alle Bildmotivteile, welche in das an die Randseite 23 angrenzende Feld fallen, müssen um den in das jeweilige Randfeld 25 eingezeichneten Vektor a, b, c, -a, -b oder -c verschoben werden. Das Randfeld 25 ist das an die jeweilige Randseite 23 angrenzende Feld und wird durch diese Randseite 23 und die Winkelhalbierende 24 in den beiden Endpunkten der Randseite 23 gebildet. Eine Winkelhalbierende 24 teilt den von zwei aneinanderstoßenden Randseiten 23 gebildeten Winkel in zwei gleich große Teile.

Die Figur 17 zeigt einige während des Entwurfs in den hier sechseckförmigen Einzelrapport eingetragene Motivelemente 26 und 27. Die Motivelemente 26 überschreiten Randseiten 23, fallen teilweise in die Randfelder 25 und werden daher automatisch zur gegenüberliegenden Randseite übertragen.

Die Figur 18 zeigt einen Einzelrapport 1 mit den bereits übertragenen Motivelementen 26, 27 während der Entwurfsphase und die Figur 19 ein für die geometrische Addition fertiggestelltes Einzelmuster.

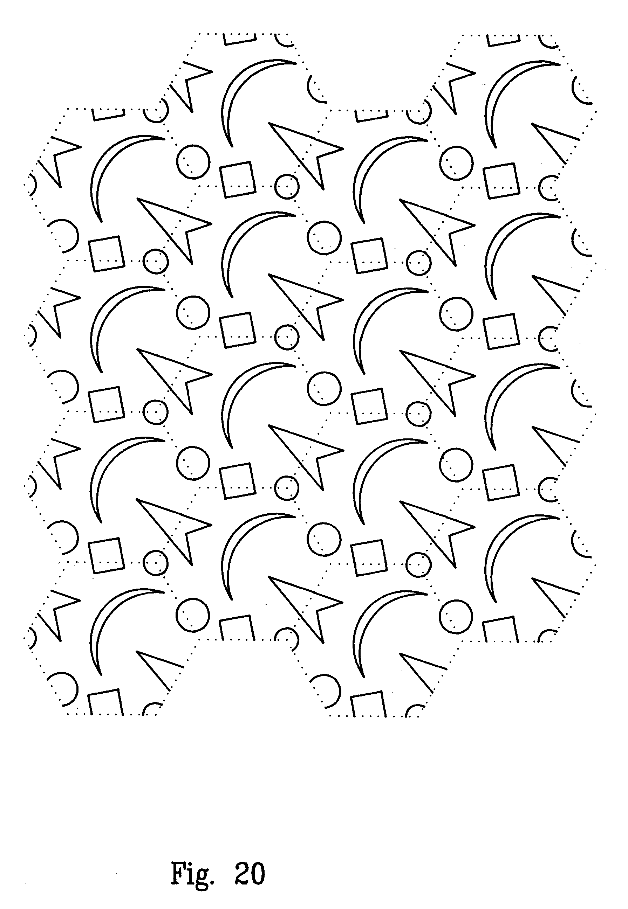

Die Figur 20 zeigt schließlich das aus den Einzelmustern der Figur 19 zusammengefügte Gesamtmuster. Es ist aus dieser Figur auch zu entnehmen, daß der Fall des regelmäßigen Sechsecks auf den Fall einer Raute (Figuren 13 bis 15) ohne Vertikalversatz V zurückgeführt werden kann. Diese Raute wird durch vier gleichartige Punkte (z. B. die Mittelpunkte) von vier eng benachbarten, aneinandergrenzenden Sechsecken bestimmt. Es liegt auf der Hand, daß diese Sechsecke nicht so gewählt werden dürfen, daß alle ihre Mittelpunkt auf einer Geraden liegen.

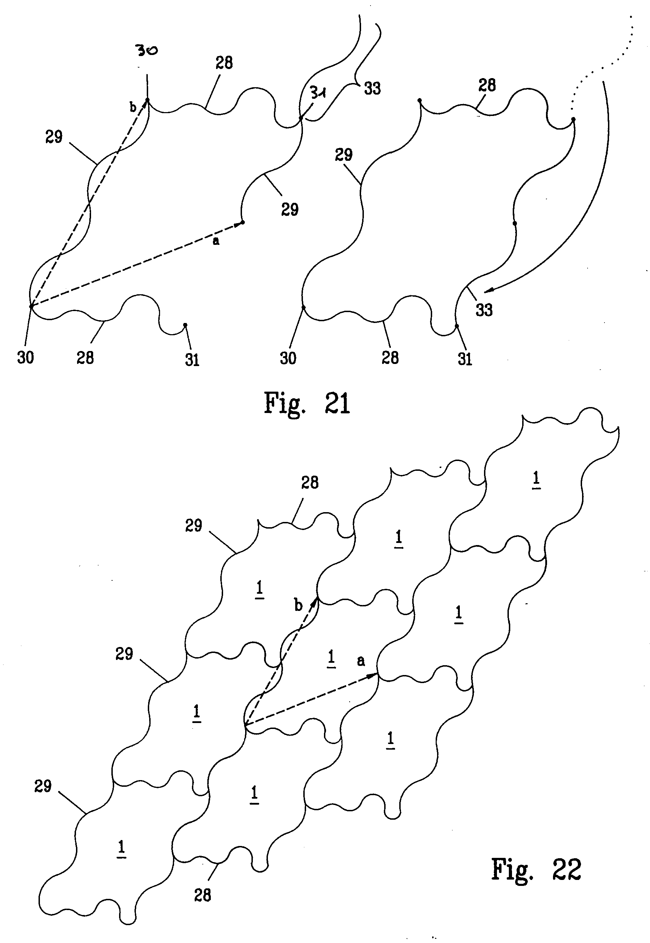

Grundsätzlich ist es nicht einmal notwendig, für den Rand eines Einzelrapports Polygone (Vierecke, Sechsecke) vorzusehen. Es können auch nicht gerade Kurvenzüge als Rand eines Einzelrapports 1 verwendet werden. Die Figuren 21 bis 27 stellen für diesen Fall ein Beispiel vor.

Es zeigt die Figur 21 wie ein durch einen nicht geraden Kurvenzug umrandeter Einzelrapport 1 gebildet werden kann, der geometrisch additionsfähig ist. Zunächst wird ein beliebiger Kurvenzug 28 zwischen den Punkten 30 und 31 gebildet. Dieser Kurvenzug 28 wird dann um einen beliebigen Vektor b verschoben, um den gegenüberliegenden Rand zu bilden. Ein großteils ebenfalls beliebiger Kurvenzug 29 wird gebildet, für welchen nur die Einschränkung gilt, daß dieser Kurvenzug 29 von einem Endpunkt, etwa den Endpunkt 30 des Kurvenzugs 28, ausgeht und sein anderer Endpunkt mit dem entsprechenden Endpunkt 30 des zweiten, aus der Verschiebung hervorgegangenen Kurvenzugs 28 zusammenfällt. Der Kurvenzug 29 wird dann um einen Vektor a verschoben, welcher seinerseits nicht zum Vektor b parallel liegen darf. Außerdem muß der Vektor b so gewählt werden, daß ein Punkt des Kurvenzugs 29 mit dem anderen Endpunkt 31 des zweiten Kurvenzugs 28 zusammenfällt. Der so durch die zwei Kurvenzüge 28 und 29 gebildete Rand umschließt noch keinen Flächenabschnitt ohne Lücke. Um einen lückenlos von der Randkurve umschlossenen Einzelrapport zu erhalten, wird der über den Endpunkt 31 des oberen Kurvenzugs 28 hinausstehende Abschnitt des Kurvenzugs 29 abgetrennt und mit seinem abgetrennten Ende in den Endpunkt 31 des unteren Kurvenzugs 28 verschoben. Die Summe dieser Kurvenzüge umschließt jetzt einen Flächenabschnitt, der einem Einzelrapport 1 entspricht. Die Figur 22 zeigt das diesem Einzelrapport entsprechende Additionsbild, in welches jedoch noch keine Bildmotive eingetragen sind.

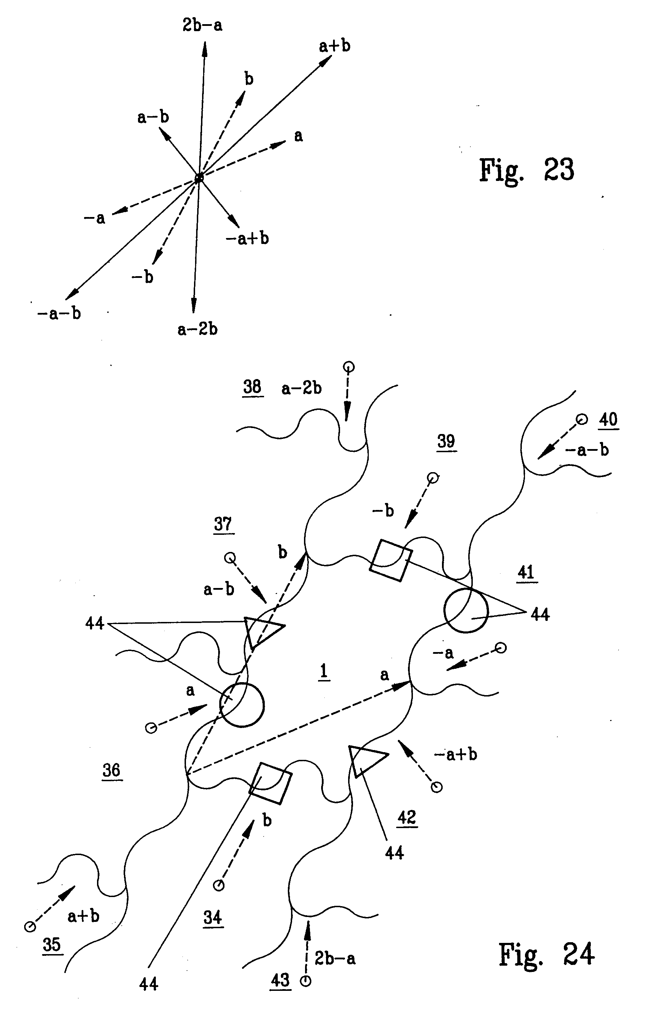

Die Figur 23 zeigt, wie in einem weiteren Verfahrensschritt die für das rapportrichtige Verschieben erforderlichen abgeleiteten Kombinationsvektoren a+b, a-b, b-a, -a-b, a-2b und 2b-a gebildet werden.

In Figur 24 sind die einen Einzelrapport 1 umgebenden Randfelder 34 bis 43 dargestellt und es sind die Verschiebevektoren eingetragen, welche diesen Feldern zugeordnet sind. Alle Motivelemente 44, welche die Berandung des Einzelrapports überragen und in die Randfelder 34 bis 43 hineinreichen, werden kopiert und um jenen Verschiebevektor verschoben, welcher dem jeweiligen Randfeld zugeordnet ist.

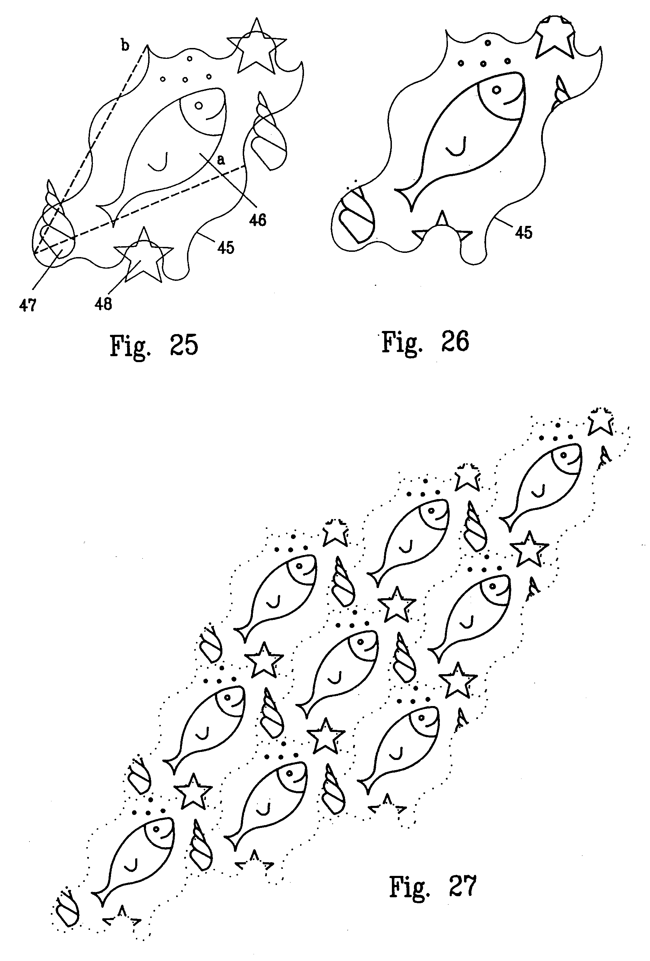

Die Figur 25 illustriert dies anhand einiger Motivelemente. Völlig von der geschlossenen Randkurve 45 umgeben ist das Motivelement 46 (Fisch). Das Motivelement 47(Schneckenhaus) ragt während des Entwurfs in den in Figur 35 definierten Randbereich 45 und wird daher sofort zur Entwurfszeit um den Vektor a verschoben. Das Motivelement 48 ragt ebenfalls bereits zur Entwurfszeit in den Randbereich 45 und wird daher kopiert und um den Vektor b verschoben. Nach Fertigstellung des Entwurfs werden für den Einzelrapport nur die Innerhalb der Randkurve 45 gelegenen Bildpunkte verwendet. Dies entspricht dem in Figur 26 gezeigten Einzelmuster.

Die Figur 27 zeigt ein mehrfach kopiertes Einzelmuster, das in einer der geometrischen Addition entsprechenden Weise um den Vektor m.a bzw. n.b jeweils verschoben wird und so das Additionsbild erzeugt; m und n sind hierbei ganze Zahlen.

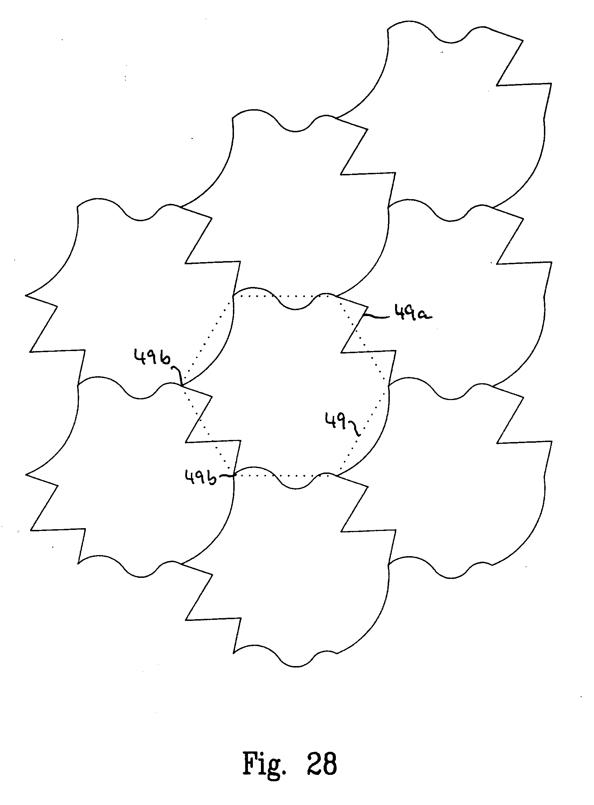

Die Figur 28 zeigt schließlich, daß es auch möglich ist, einen Einzelrapport mit beliebiger Umrandungskurve über einer hexagonalen Einzelrapport-Grundstruktur aufzubauen. Zu diesem Zweck hat man die Randselten 49 eines regelmäßigen Sechsecks durch eine beliebige Randkurve 49a zu ersetzen, wobei jedoch der Anfangs- und der Endpunkt dieser Randkurve 49a mit den entsprechenden Punkten 49b der ersetzten Sechseckseite 49 zusammenfallen müssen. Außerdem müssen die jeweils gegenüberliegenden, parallelen Seiten des Sechsecks durch die gleiche Randkurve ersetzt werden.

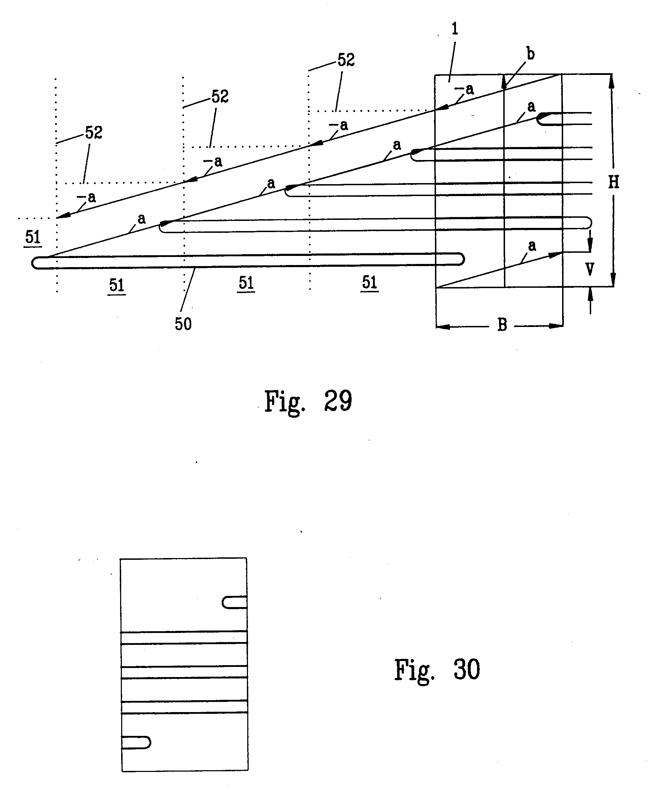

In den Figuren 29 bis 31 wird der Fall eines Motivelements 50 behandelt, dessen Längserstreckung die Einzelrapportbreite B des Einzelrapports 1 um ein Vielfaches von B überragt. Das Motivelement 50 ragt somit in mehrere benachbarte Einzelrapporte 51, die teilweise dargestellt und durch die punktierten Linien 52 berandet sind. Diese benachbarten Einzelrapporte 51 sind aus einer mehrfachen Kopie und mehrfachen Verschiebung des Einzelrapports 1 um jeweils den Vektor -a hervorgegangen. Um hier den additionsfähigen, zeichnerischen Inhalt des Einzelrapports 1 zu erhalten, müssen die Bereiche des Motivelements 50, die jeweils in einen anderen Einzelrapport 51 fallen, getrennt in den Einzelrapport 1 zurückübertragen werden. Für diese Rückübertragung ist ein Vektor zu verwenden, welcher gleich groß aber entgegengesetzt zu jenem Vektor ist, der vom Einzelrapport 1 zu identischen Punkten eines Einzelrapports 51 weist.

Die Figur 30 zeigt den auf diese Weise erhaltenen zeichnerischen Inhalt (Einzelmuster) des Einzelrapports 1.

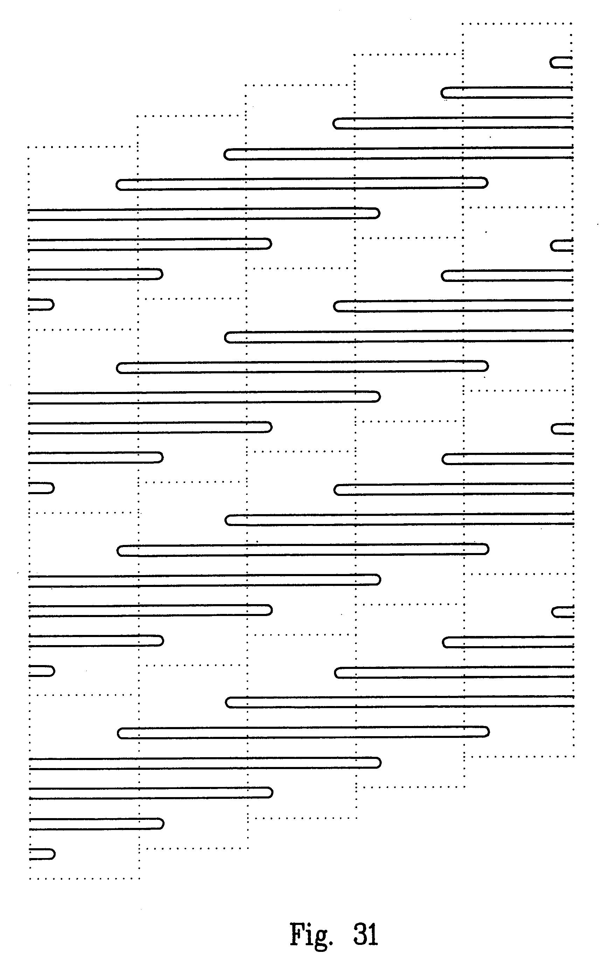

Die Figur 31 zeigt schließlich einen größeren Ausschnitt des durch die geometrische Addition von vielen Einzelmustern erhaltenen Gesamtmusters. Hierbei wurden für das geometrische Addieren bzw. Aneinanderfügen die schon öfter beschriebenen Vektoren a und b verwendet.

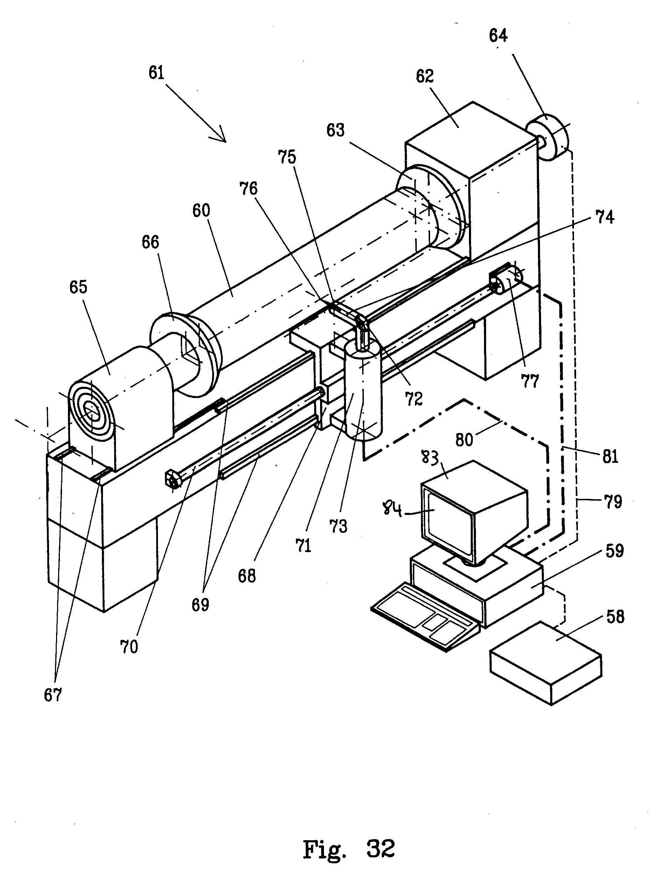

Die Figur 32 zeigt eine Einrichtung, aufwelcher das bis jetzt beschriebene Verfahren zur Anwendung gelangt. Grundsätzlich wird der gebildete zeichnerische Inhalt zumindest eines Einzelrapports in digitalisierter Form in einem Massenspeicher 58 abgelegt, wobei über eine nicht mehr dargestellte Datennetzleitung die Information über den Zeichnungsinhalt zuvor dem Steuerrechner 59 übermittelt worden ist. Als Ausgabemedium für das Gesamtmuster wurde hier eine Siebschablone 60 gewählt, deren Oberfläche mit Lackvollständig abgedeckt ist.Die Siebschablone 60 ist auf einem Laserengraver 61 zwischen zwei Mitnahmekegeln 63 und 66 eingespannt. Der rechtsseitige Mitnahmekegel 63 wird über einen Spindelkasten 62 durch einen nicht mehr gezeigten Elektromotor angetrieben. Ein mit dem rechtsseitigen Mitnahmekegel 63 drehsteif verbundener Impulsgeber 64 sendet eine dem Vorrücken der Schablone in Umfangsrichtung entsprechende Zahl von Impulsen an den Steuerrechner 59 über die Impulsleitung 79. Der linksseitige Mitnahmekegel 66 ist in einem Reitstock 65 drehbar gelagert und stützt die Schablone 60 an ihrem anderen Ende. Der Reitstock 65 kann auf Führungen 67 parallel zur Längsachse der Schablone 60 verschoben und so auf deren Länge eingestellt werden. Auf anderen Führungen 69, die ebenfalls parallel zur Längsachse der Schablone 60 angeordnet und am Maschinenbett befestigt sind, wird ein Schlitten 68 durch eine Spindel 70 bewegt. Dieser Schlitten 68 trägt einen Laser 71, der in Richtung seiner Achse 73 einen Laserstrahl 74 emittiert. Dieser Laserstrahl 74 wird durch einen Spiegel 72 umgelenkt und der umgelenkte Laserstrahl 74 durch eine Optik 75 aufdie Oberfläche der Schablone 60 fokussiert. Der so erhaltene Fokusfleck 76 beeinflußt den Lack, der die Oberfläche der Schablone 60 abdeckt. Bei einer langwelligen, thermischen Strahlungsemission des Lasers 71 wird der Lack abgetragen oder ist der Lack lichtempfindlich und liegt die Wellenlänge des Lasers 71 im Empfindlichkeitsbereich des Lacks, dann wird dieser je nach seiner Beschaffenheit entweder gehärtet oder geschädigt und durch einen nachfolgenden Entwicklungsprozeß können die nicht gehärteten oder geschädigten Stellen des Lacks herausgelöst werden. Die Belichtung der Oberfläche der Schablone 60 muß so erfolgen, daß die von dem Fokuspunkt während der Drehung der Schablone 60 gebildeten Spuren eng aneinanderliegen, um ein möglichst lückenloses Musterbild zu erhalten. Der Laser 71 wird mit dem Schlitten 68 durch die Spindel 70 bewegt, die wiederum von einem Schrittmotor 77 in Drehung versetzt wird. Für die Ausgabe der richtigen Schrittimpulse über die Leitung 81 sorgt der Steuerrechner 59, wobei natürlich ein nicht mehr gezeigter Pulsumsetzer vorhanden ist, der für die Transformation der logischen Schrittimpulse in Leistungsimpulse zur endgültigen Ansteuerung des Schrittmotors 77 sorgt

Die Anwendung der Erfindung ist auf das zuletzt gezeigte Ausführungsbeispiel nicht beschränkt. Die Ausgabe des Gesamtmusters kann z. B. auch auf einen durch eine Laserdiode zu belichtenden Film erfolgen oder natürlich auch nur auf einem Bildschirm 84 eines Monitors 83, damit etwa ein visueller Gesamteindruck vom zu erzeugenden Muster gewonnen werden kann. Der Monitor 83 wird vom Rechner 59 angesteuert.

**Patentansprüche**

1. Musterbildungsverfahren, **gekennzeichnet durch** die Herstellung eines rapportierfähigen Einzelmusters innerhalb eines Einzelrapports (1) zur Erzeugung eines aus mehreren Einzelmustern bestehenden Gesamtmusters, bei dem über den Einzelrapport (1) hinausstehende Bereiche von Motiven (16, ...) so in den Einzelrapport (1) übertragen werden, daß bei Bildung des Gesamtmusters durch Aneinanderfügen der Einzelrapporte (1) die ursprünglichen Motive (16, ...) rückgebildet werden.

2. Verfahren nach Anspruch 1, **dadurch gekennzeichnet,** daß ausgehend von einem beliebig gewählten Punkt innerhalb eines ersten Einzelrapports (1) mindestens ein Vektor (a, b, ...) gebildet wird, welcher zum identischen Punkt anderer Einzelrapporte weist, in welche Motive, die teilweise im ersten Einzelrapport (1) liegen, hineinragen, und daß die in diesen anderen Einzelrapporten liegenden Bereiche der Motive entgegen der jeweiligen Vektorrichtung um den jeweiligen Vektorbetrag verschoben werden.

3. Verfahren nach Anspruch 2, **dadurch gekennzeichnet,** daß die Verschiebung entgegen der jeweiligen Vektorrichtung in mehreren Schritten erfolgt (Figuren 8 bis 11; Figuren 29 bis 31).

4. Verfahren nach Anspruch 2, **dadurch gekennzeichnet,** daß die jeweiligen Verschiebeschritte in unterschiedlichen Richtungen ausgeführt werden (Figuren 8 bis 11).

5. Verfahren nach Anspruch 2, **dadurch gekennzeichnet,** daß die jeweiligen Verschiebeschritte in derselben Richtung ausgeführt werden (Figuren 29 bis 31).

6. Verfahren nach einem der Ansprüche 1 bis 5, **dadurch gekennzeichnet,** daß das rapportierfähige Einzelmuster unter Verwendung eines elektronischen Rechners (59) auf dem Bildschirm (84) eines Monitors (83) erstellt und in einem elektronischen Speicher (58) zwischengespeichert wird.

7. Verfahren nach Anspruch 6, **dadurch gekennzeichnet,** daß das rapportierfähige Einzelmuster zur Bildung des Gesamtmusters wiederholt aus dem elektronischen Speicher (58) ausgelesen wird.

8. Verfahren nach Anspruch 7, **dadurch gekennzeichnet,** daß das rapportierfähige Einzelmuster in einen Schablonenrohling (60) übertragen wird, um in ihm das Gesamtmuster zu bilden.

9. Verfahren nach Anspruch 8, **dadurch gekennzeichnet,** daß die Übertragung des rapportierfähigen Einzelmusters in den Schablonenrohling (60) durch Belichtung einer lichtempfindlichen Schicht des Schablonenrohlings (60) erfolgt.

10. Verfahren nach Anspruch 9, **dadurch gekennzeichnet,** daß die Belichtung der lichtempfindlichen Schicht durch den Strahl eines Lasers (71) erfolgt, der in Übereinstimmung mit den im elektronischen Speicher (58) gespeicherten Bilddaten des rapportierfähigen Einzelmusters einund ausgeschaltet wird.

11. Verfahren nach Anspruch 9, **dadurch gekennzeichnet,** daß die Belichtung er lichtempfindlichen Schicht über einen Film erfolgt, in den zuvor das aus mehreren rapportierfähigen Einzelmustern bestehende Gesamtmuster übetragen wurde.

Fig. 1

Fig. 2

Fig. 3

Fig. 4

Fig. 5

16

15

16

Fig. 6

V

V

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

16

Fig. 20

Fig. 21

Fig. 22

Fig. 23

Fig. 24

Fig. 25

Fig. 26

Fig. 27

Fig. 28

Fig. 29

Fig. 30

Fig. 31

Fig. 32

Europäisches
Patentamt

**EUROPÄISCHER RECHERCHENBERICHT**

Nummer der Anmeldung

EP 95 11 6134

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | WO-A-95 00919 (ATHENA DESIGN SYSTEMS INC) 5.Januar 1995 * Anspruch 1; Abbildungen 5-7 * | 1-3,6,7 | G06T11/00 |
| Y | | 4,5,8-11 | |
| Y | EP-A-0 535 895 (IBM) 7.April 1993 * Spalte 1, Zeile 43 - Spalte 3, Zeile 22; Abbildung 20 * | 4,5,8-11 | |
| A | WO-A-92 10904 (PIXAR) 25.Juni 1992 * Seite 25, Zeile 1 - Zeile 25; Anspruch 1; Abbildungen 18,19 * | 1-11 | |
| A | EP-A-0 535 987 (DAINIPPON PRINTING CO LTD) 7.April 1993 | | |

RECHERCHIERTE
SACHGEBIETE (Int.Cl.6)

G06T

Der vorliegende Recherchenbericht wurde für alle Patentansprüche erstellt

| Recherchenort | Abschlußdatum der Recherche | Prüfer |
|---|---|---|
| DEN HAAG | 13.März 1996 | Perez Molina, E |